# EUROPEAN PATENT APPLICATION

(11) **EP 1 884 949 A2**
(43) Date of publication of application: **06.02.2008**
(21) Application number: 06019802.5
(22) Date of filing: 21.09.2006
(51) Int. Cl.: G11B 27/034, G11B 27/10

(54) **Methods for searching data recorded in a storage and recording systems that allow playback utilizing trick-mode operations**

(30) Priority: 02.08.2006 US 461775
(71) Applicant: MediaTek, Inc, 1st, Science-Based Industrial Park Hsin chu (TW)
(72) Inventor: Chen, Chia-Hung, Jhubei City Hsinchu County (TW); Huang, Kan-Li, Sinyi District Taipei City (TW); Hsu, Wei, Sindian City Taipei County (TW); Chen, Bang-Cheng, Kao-Hsiung City (TW)
(74) Representative: Hager, Thomas Johannes

(57) **Abstract**

Methods and systems (200) for recording and searching data in a storage (250) are disclosed. The method includes: receiving a digital data stream comprising a plurality of frames; encoding the frames of the digital data stream; grouping the encoded frames into a plurality of video frame units (VFUs), wherein each VFU has the same playback duration; and storing each VFU in a separate block in the storage (250). A data address corresponding to each VFU may be calculated or searched from a look-up table by a time-shift parameter when playing back the VFU stored in the storage (250).

## Description

The present invention relates to methods and systems of recording data to a storage that allows a user to perform trick playback modes according to the pre-characterizing clauses of claims 1, 17, and 27.

Time shift is a function of digital technology, whereby a digital multimedia signal is received and stored in a buffer, and then played back. The delay in time between receiving the multimedia signal and playing it back allows a user to perform so-called 'trick functions' such as slow reverse, freeze frame etc. Previous frames of the multimedia signal can also be searched for. A time-shift buffer is used for storing data to be played back during time-shift playback. Conventional time-shift buffers store data in a cyclical manner. In the related art, the buffer acts as a ring buffer, whereby data stored at the beginning of the buffer will be recorded over by the most recent data once the buffer has reached capacity. Video such as a feature length movie or a live sports game will often exceed the size of the buffer. As data in the buffer is recorded continuously with no special predefined data structure it is hard to utilize a time parameter to search for previous frames. In other words, the data is only stored according to address information and not according to time information. This also means that other information relating to time parameters cannot be displayed on the screen, such as chapter information of a television program, chapter time etc. Furthermore, if the bit stream is transferred to a recording format such as DVD-VR or DVD+VR, the whole bit stream needs to be scanned in order to generate the necessary information. This means a processing time will be significant.

This in mind, the present invention aims at providing methods and systems of recording data to a storage that allows a user to perform trick playback modes according to time parameters.

This is achieved by a method according to claim 1 and systems according to claims 17 and 27. The respective dependent claims pertain to corresponding further developments and improvements.

As will be seen more clearly from the detailed description following below, the claimed methods and systems are capable of processing a plurality of video frame units (VFUs) each having the same playback duration.

For completeness, various aspects of the invention are described in the following numbered clauses:
1. A method for searching data recorded in a storage, comprising;
   receiving a digital data stream comprising a plurality of frames;
   encoding the frames of the digital data stream;
   grouping the encoded frames into a plurality of video frame units (VFUs), wherein each VFU has the same playback duration;
   storing each VFU in the storage;
   determining a data address for a VFU stored in the storage based on information acquired from encoding; and
   retrieving the VFU from the storage using the data address.
2. The method of clause 1, wherein the step of determining a data address for a VFU stored in the storage based on information acquired from encoding further comprises:
   storing data addresses indexing each VFU stored in the storage.
3. The method of clause 2, wherein the step of storing data addresses indexing each VFU stored in the storage further comprises:
   determining a data address for the first encoded frame of each VFU stored in the storage; and
   storing the data address of each VFU.
4. The method of clause 1, wherein the step of encoding the frames of the digital data stream further comprises:
   generating a bit stream size for each frame in the digital data stream; and
   encoding the frames of the digital data stream according to a plurality of bit stream sizes to thereby make each VFU have the same data size.
5. The method of clause 4, wherein the data address of a VFU is calculated based on a time-shift parameter and the fixed data size of each VFU.
6. The method of clause 1, wherein each VFU is not limited to have the same data size.
7. The method of clause 6, wherein the step of encoding the frames of the digital data stream further comprises:
   generating a bit stream size for each encoded frame; and
   accumulating the bit stream size of each encoded frame in each VFU to determine the data address of each VFU.
8. The method of clause 7, wherein the data address corresponds to the first encoded frame of each VFU stored in the storage.
9. The method of clause 1, wherein the step of determining a data address for a VFU stored in the storage based on information acquired from encoding further comprises:
   creating a look-up table corresponding to a plurality of VFUs respectively, each entry containing at least the data address of a VFU.
10. The method of clause 8, further comprising:
   storing a timing information and a data size of each VFU into a corresponding entry of the look-up table.
11. The method of clause 9, wherein an entry of the look-up table is updated as a VFU stored in the storage is overwritten.
12. The method of clause 1, wherein the step of retrieving the VFU from the storage using the data address further comprises:
   searching at least a target encoded frame of a VFU using the data address according to a time-shift parameter; and
   playing back data in the storage from the target encoded frame.
13. The method of clause 12, wherein the step of searching at least a target encoded frame of a VFU using the data address according to a time-shift parameter further comprises:
   locating the target encoded frame according to the number of encoded frames per VFU and the time-shift parameter.
14. The method of clause 12, wherein each VFU is not limited to have the same data size, the method further comprises creating a look-up table corresponding to a plurality of VFUs respectively, each entry containing at least the data address of a VFU, and the step of searching at least a target encoded frame further comprises:
   locating the target encoded frame according to the look-up table and the time-shift parameter.
15. The method of clause 12, wherein the step of playing back data in the storage from the target encoded frame further comprises:
   decoding the VFU; and
   playing the decoded VFU.
16. The method of clause 15, wherein the step of decoding the VFU further comprises:
   copying the VFU to a memory.
17. A system for recording data, comprising:
   an encoding module, for receiving a digital data stream comprising a plurality of frames, and encoding the frames of the digital data stream;
   a microprocessor, coupled to the encoding module, for controlling the encoding module to group the encoded frames into a plurality of video frame units (VFUs), wherein each VFU has the same playback duration; and
   a first storage, coupled to the encoding module, for storing each VFU in a separate block of the first storage;
   wherein the microprocessor determines a data address for indexing a VFU stored in the first storage based on information generated by the encoding module.
18. The system of clause 17, further comprising a second storage, wherein the microprocessor further determines a data address of each VFU stored in the first storage, and stores the data address of each VFU in the second storage.
19. The system of clause 17, wherein the microprocessor controls the encoding module to generate a bit stream size for each frame, and encodes the frames according to a plurality of bit stream sizes so each VFU has the same data size.
20. The system of clause 19, wherein the microprocessor searches a VFU by calculating a data address of the first encoded frame of the VFU or a beginning of the VFU based on a timing parameter.
21. The system of clause 17, wherein each VFU is not limited to have the same data size.
22. The system of clause 21, further comprising a second storage, wherein the microprocessor controls the encoding module to generate a bit stream size for each encoded frame, accumulate the bit stream size of each encoded frame in each VFU to determine a data address of each VFU , and store the data address of each VFU into the second storage.
23. The system of clause 22, wherein the data address corresponds to the first encoded frame of each VFU stored in the first storage.
24. The system of clause 23, wherein the microprocessor further creates a look-up table in the second storage, where the look-up table has a plurality of entries corresponding to a plurality of VFUs respectively, and each entry contains at least the data address of a VFU.
25. The system of clause 24, wherein the look-up table further stores a timing information and a data size of each VFU into a corresponding entry.
26. The system of clause 25, wherein an entry of the look-up table is updated as a VFU stored in the first storage is overwritten.
27. A system for playing back data, comprising:
   a first storage, for storing a plurality of VFUs, wherein each VFU is stored in a separate block in the first storage, where each separate block can be searched by a data address, and each VFU has the same number of encoded frames;
   a microprocessor, coupled to the first storage, for utilizing a time-shift parameter to search the first storage for at least a target encoded frame of a VFU; and
   a playback device, coupled to the microprocessor and the first storage, for playing back data in the first storage from the target encoded frame.
28. The system of clause 27, wherein each VFU has the same data size, and the microprocessor searches the first storage for the target encoded frame or target VFU according to the time-shift parameter and the number of encoded frames per VFU.
29. The system of clause 27, further comprising a second storage,
wherein each VFU is not limited to have the same data size, the microprocessor further creates a look-up table in the second storage, the look-up table has a plurality of entries corresponding to a plurality of VFUs respectively, each entry containing at least the data address of a VFU, and the microprocessor searches the first storage for the target encoded frame according to the look-up table and the time-shift parameter.

In the following, the invention is further illustrated by way of example, taking reference to the accompanying drawings. Thereof
Fig.1 is a block diagram of a conventional apparatus for storing data to a buffer for playback;
Fig.2 is a block diagram of a system for storing data to a buffer for playback according to an embodiment;
Fig.3 is a flowchart of a recording method according to an embodiment of the present invention;
Fig.4 is a diagram illustrating mapping between a look-up table and VFUs; and
Fig. 5 is a flowchart of a playback method according to an embodiment of the present invention.

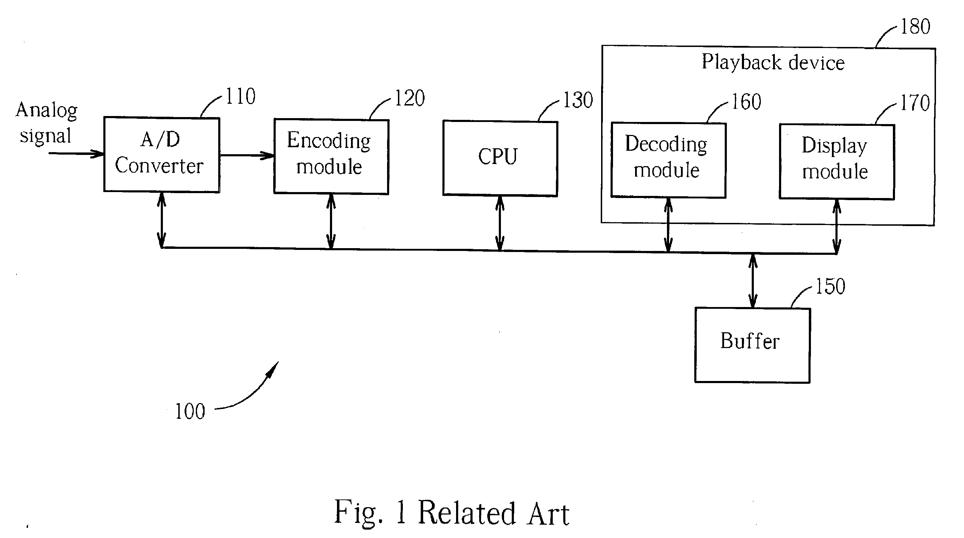

Please refer to Fig.1. Fig.1 is a block diagram of a conventional apparatus 100 with the time-shift function, which records data to a buffer 1 50 for playback. The apparatus 100 comprises an analog-to-digital (A/D) converter 110, an encoding module 120, a central processing unit (CPU) 130, a playback device 180, comprising a decoding module 160 and a display module 170, and a buffer 150. In this related art, the buffer 1 50 is for storing data to be played back during time-shift playback. The A/D converter 110 receives an analog signal and converts it to a digital data stream. The encoding module 120 compresses/encodes the digital data stream and the CPU 130 saves the compressed/encoded data to the buffer 150. When the compressed data is ready to be played back, the compressed/encoded data will be output from the buffer 150 and sent to the playback device 180. The decoding module 160 decodes the compressed data and outputs the decoded data to the display module 170 for playing. The buffer 1 50 acts as a ring buffer, whereby data stored at the beginning of the buffer 1 50 will be recorded over by the most recent data once the buffer 1 50 has reached capacity. In addition, as known to those skilled in this art, the CPU 130 will create a write pointer to control data recording in the buffer 1 50 and a read pointer to control data retrieving. Data is only stored according to address information and not according to time information. Furthermore, if the bit stream is transferred to a recording format such as DVD-VR or DVD+VR, the whole bit stream needs to be scanned in order to generate the necessary information.

Certain terms are used throughout the description and following claims to refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

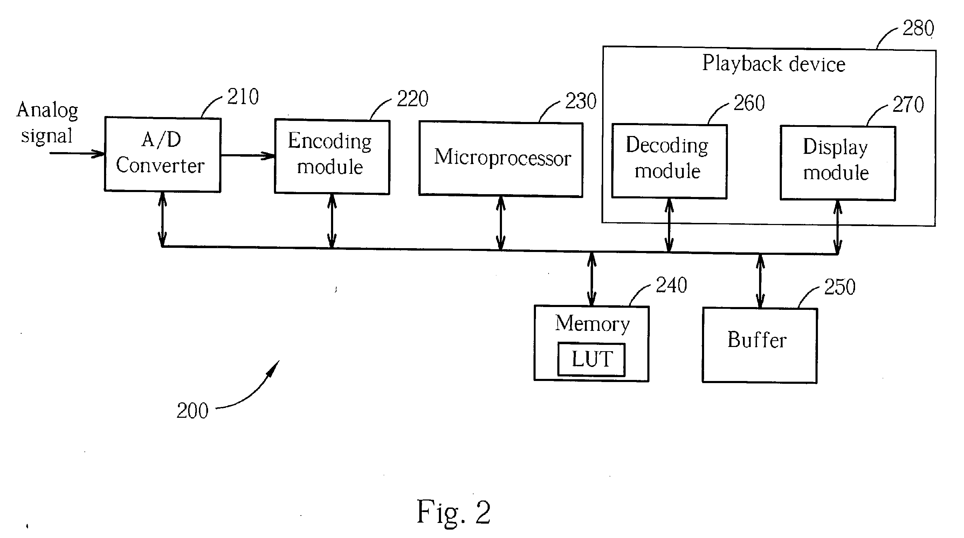

Fig.2 is a block diagram of a system 200 capable of recording data to a buffer for playback according to an embodiment of the present disclosure. Please note that, although some components in Fig.2 have the same name as Fig.1, they may differ in function, and are therefore labeled with different numerals. Furthermore, compared to the related art buffer 150 shown in Fig.1, the buffer 250 is allowed to buffer data in a discontinuous fashion if a look-up table is created, and has a predefined structure that is configured by the encoding module 220 and the microprocessor (e.g. a complicated CPU or simple micro-controller) 230. The A/D converter 210 receives an analog signal and converts it to a digital data stream. The encoding module 220 then compresses/encodes frames in the digital data stream to output encoded frames. Conventionally, after frames (e.g. video frames) are encoded/compressed, the encoded frames are stored in a continuous fashion in a storage device. In the present disclosure, however, before data is stored into the buffer 250 the microprocessor 230 controls the encoding module 220 to group the encoded frames into a predefined structure, such as groups of pictures (GOP) in an MPEG specification or video object units (VOBU) in a video specification, wherein each GOP or VOBU has the same number of encoded frames, and therefore consumes the same timing during playback. As data is played in terms of frames per second, therefore a fixed number of frames will have a fixed timing. In the specification, the term video frame units (VFUs) will be used herein, where a VFU is not limited to a particular number of frames defined by related specifications, the number of frames can be defined or selected upon requests per user or designer, and may be adaptive. The microprocessor 230 further controls the encoding module 220 to generate a bit stream size for each frame in the digital data stream output from the A/D converter 110, and generates a data address for each VFU stored in the buffer 250. The data address relates to a first frame (e.g. I frame) of a VFU, for example, the starting address of the first frame stored in the buffer 250. By this method, each data address can be directly translated to timing information.

In a first data processing scheme of the present disclosure, each VFU also has the same amount of data (or the same bit rate); this is generally known as constant bit rate (CBR) coding. In this case, the predefined VFU structure includes both fixed digital frame numbers (i.e. fixed time period) and fixed compressed data size. Please note that each individual encoded frame in a VFU will differ from other encoded frames in the VFU in terms of the amount of data it contains, but each VFU can contain a fixed data size when the encoding module 220 performs data encoding by referencing the allocated fixed data size for the VFU and the cumulative data size used in encoding previous frames. Each encoded frame of a VFU may be composed of pure video data or it may contain any combination of video data, side information, and padding data. Each data address of the first frame of a VFU (e.g. I frame) corresponds to a timing information, and the time between a first VFU and a following VFU is a constant. As a typical rate of data transmission is 30 frames per second, if each VFU comprises 15 frames then the timing of one VFU = 0.5 seconds. Therefore, searches utilizing time constraints can easily be performed. For example, if a viewer wishes to see action that was displayed 2 minutes ago, as 2 minutes = 120 seconds, the microprocessor 230 merely needs to calculate 120 seconds divided by the time interval of a VFU (120/0.5) to calculate the position in the buffer 250 that needs to be located. In this case, the microprocessor 230 needs to search back 240 VFUs.

Grouping the encoded frames into groups where each group has the same data size might reduce the overall display quality or coding efficiency of the pictures. To avoid this, a second data processing scheme of the present disclosure groups the data into groups of pictures, where each VFU only has a fixed number of encoded frames but does not have a fixed amount of data. In this method, each VFU will take up a different amount of storage space in the buffer 250, and therefore a look-up table (LUT) may be used to store the address information. The look-up table (LUT) is stored in the memory 240, such as a DRAM. It should be noted that the memory 240 and the buffer 250 are shown as separate storage devices. However, this is not meant to be a limitation of the present disclosure. In addition, any devices having data storage capability can be used by the system 200 to store the desired data, such as the VFUs and/or the look-up table (LUT). For example, the memory 240 and the buffer 250 are both implemented in a single random access memory, where the memory 240 is assigned with one storage space and the buffer 250 is assigned with another storage space.

An exemplary look-up table (LUT) contains information relating to timing, bit size, and address information. As each VFU has a different data size, the amount of storage space allocated to each VFU will vary, therefore the look-up table (LUT) contains the data size of each VFU. The microprocessor 230 may monitor the total data size of the VFUs stored in the buffer 250 to ensure there is available storage space for the new encoded bit stream. As data is stored in the buffer 250 in a cyclical fashion, once the allocated size of the buffer 250 is reached, oldest data will be overwritten. Therefore, the look-up table (LUT) will be updated by the microprocessor 130 each time the buffer 250 is updated due to overwriting. The look-up table (LUT) will also generate an address for each added VFU. This is achieved by accumulating an address of a previous VFU with the data size of a current VFU to index the current VFU. In some other embodiments, when the time-shift buffer 250 stores data in a continuous manner, the look-up table (LUT) may contain entries that are address information corresponding to every N video frames. Every two consecutive entries has a fixed time duration, thus the address information of a specific frame related to a desired time may be searched by shifting a certain number of entries.

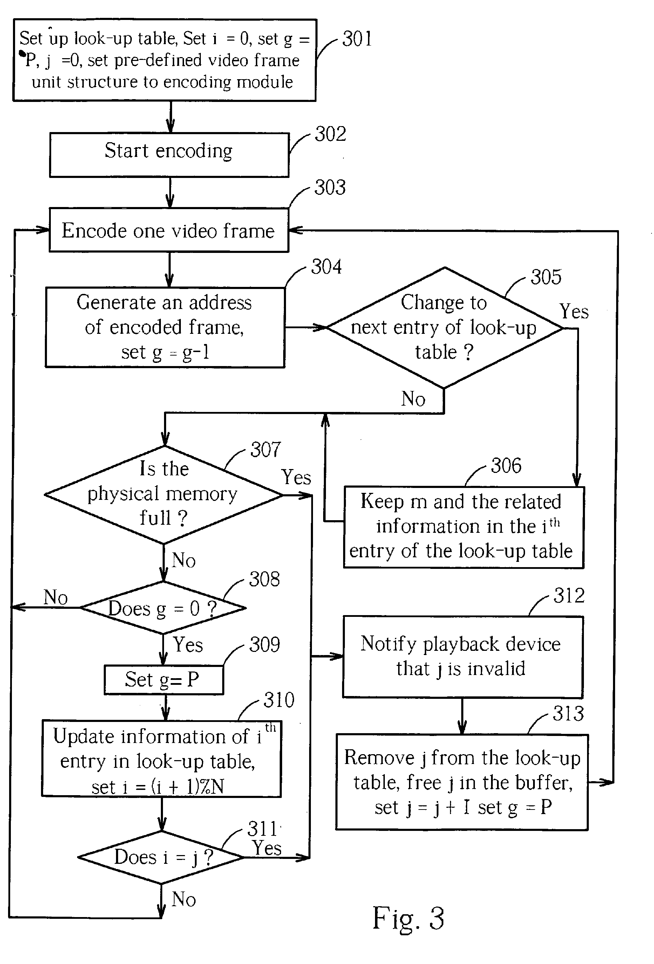

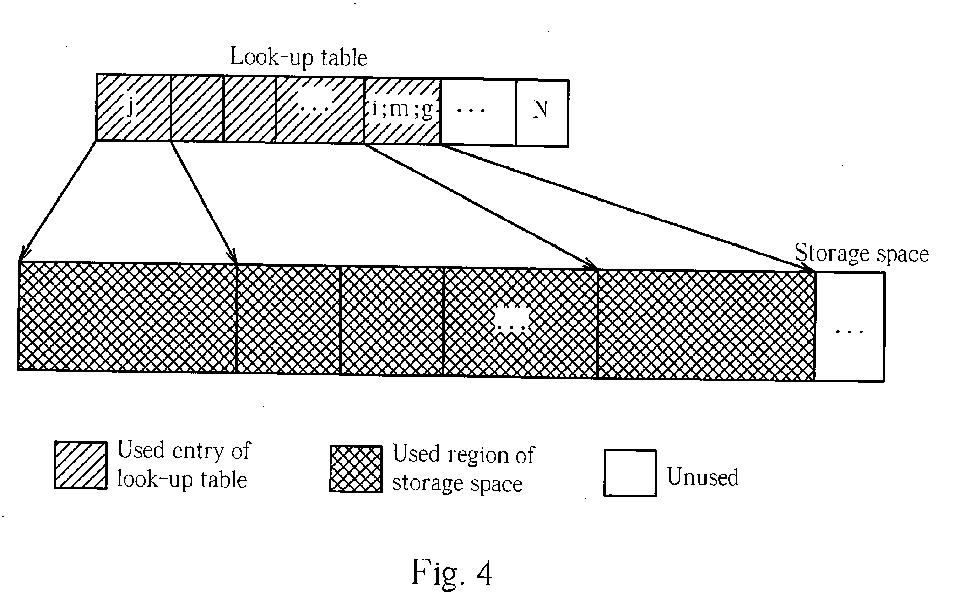

Please refer to Fig.3 and Fig.4. Fig.3 is a flowchart of recording data to the buffer 250 according to the second data processing scheme of the present disclosure. Fig.4 is a diagram illustrating mapping between the look-up table (LUT) and VFUs. As shown in Fig.4, each VFU is stored in a separate block in the buffer 250. Please note that the VFUs shown in Fig.4 are stored consecutively, that is, stored in a continuous fashion. However, since the address information is recorded in the look-up table (LUT), it is allowable to store each VFU in the buffer 250 randomly, that is, in a discontinuous fashion. In addition to data size information, parameters for time-shift recording utilizing the look-up table (LUT) may include the following.
i = current recording time-interval entry index of LUT;
j = earliest recording time-interval entry index of LUT (i.e. corresponding to the earliest VFU stored in buffer 250 that has not been overwritten)
g = frame number of current frame
N = entry number of LUT
P = number of frames remaining in a current VFU
Taking video encoding for example, the afore-mentioned frames in the digital data stream are video frames and the steps shown in Fig.3 are detailed below.
Step 301: Configure the look-up table (LUT). Set i = 0, j = 0, g = P, and set the pre-defined video frame unit structure (e.g. "IBBPBB..." in MPEG GOP structure) to the encoding module 220;
Step 302: Begin encoding and set g = P;
Step 303: Encode one video frame;
Step 304: Generate an address of the encoded frame and set g = g-l ;
Step 305: Is the current encoded frame the beginning of a VFU (e.g. an I frame)? If yes go to Step 306, if no go to Step 307;
Step 306: Keep m and the related information in the i^{th} entry of the LUT; go to Step 308;
Step 307: Is the buffer 250 full? If yes go to Step 312, if no go to Step 309;
Step 308: Is the most recent encoded frame the last frame corresponding to the i^{th} entry, i.e. does (g = 0)? If yes, go to Step 309, if no go back to Step 303 to encode the next frame;
Step 309: Set g = P;
Step 310: Update information in the i^{th} entry of the look-up table LUT; set i = (i + 1)%N, which means if i+1 reaches N, i is reset to 0;
Step 311: Check if the next recording and the earliest recording time-interval entry are overlaid, i.e. does i = j? If yes go to Step 312, if no go back to Step 303 to encode the next VFU;
Step 312: Notify playback device 280 that j is invalid;
Step 313: Remove the entry of j from the look-up table (LUT); free the memory space in the buffer 250 corresponding to j; set j = (j + 1)%N, which means j is reset to 0 when j+1 reaches N; go back to Step 303.

initially, as no data has been written yet, the look-up table (LUT) is configured so that i = 0 and j = 0 (Step 301), g is set to P. The encoding process begins (Step 302). When a video frame is encoded by the encoding module 220 (Step 303), an address is generated for the video frame and g will be set to g-1 (Step 304). The parameter g relates to the number of frames that have not been encoded in the VFU, therefore when g = 0, it can be determined that a new VFU is encoded, and the look-up table (LUT) can be updated accordingly. The system 200 determines if the current frame is the first frame of a VFU (e.g. an I frame) (Step 305). If this is not true the flow will proceed to Step 307. If this is true then m and related information will be stored in the i^{th} entry of the look-up table (Step 306). The system 200 then determines if the buffer 250 is full (Step 307). If the buffer 250 is full the flow will proceed to Step 311. If there is still space in the buffer 250 the system 200 then determines if the parameter g = 0 (Step 308), i.e. a VFU has been completely stored to the buffer 250. If this is not true the flow will return to Step 303. If g = 0, the flow will update the information stored in the i^{th} entry of the look-up table (LUT)and set (i + 1)%N, and g is set to P (Step 309). The system 200 then determines if i = j (Step 310), i.e. if the next entry in the look-up table (LUT) must be written in the entry indexing the earliest VFU stored in the buffer 250 - in other words, if the look-up table (LUT) is full. If this is not true then the flow will return to Step 303. If this is true the flow will proceed to Step 311. In Step 311 the playback device 280 is notified that the earliest recording index j is invalid. The space corresponding to j in the buffer 250 is removed, the entry j is removed from the look-up table (LUT), j is set to j + 1 (Step 312). As each VFU has a different data size, it is possible that the VFU to be recorded in a final storage space of the buffer 250 is larger than the storage space. In this case, although the look-up table (LUT) shows that there is still space for a VFU, the corresponding space in the buffer 250 is insufficient. Therefore, the look-up table (LUT)will also store the data size of each VFU so the microprocessor 230 can assign space in the storage accordingly. In such a case, some frames of the VFU will have to overwrite the earliest recorded entry in the buffer, and therefore recording index j is invalid (Steps 307, 311, 312). Similarly, a successive VFU may also exceed the previously allocated storage space in the buffer 250. In this case, two entries of the look-up table (LUT)will have to be erased, and replaced by a single entry corresponding to a single VFU. These processes are all carried out by the microprocessor 230.

When a user requires viewing data frames that have been played a specific time before a current frame, the user merely needs to input the time information (e.g. the time-shift parameter). In a case where the encoded frames are grouped into groups where each group has the same data size, the system 200 searches the buffer 250 for the encoded frame according to the time-shift parameter and the number of encoded frames per VFU.

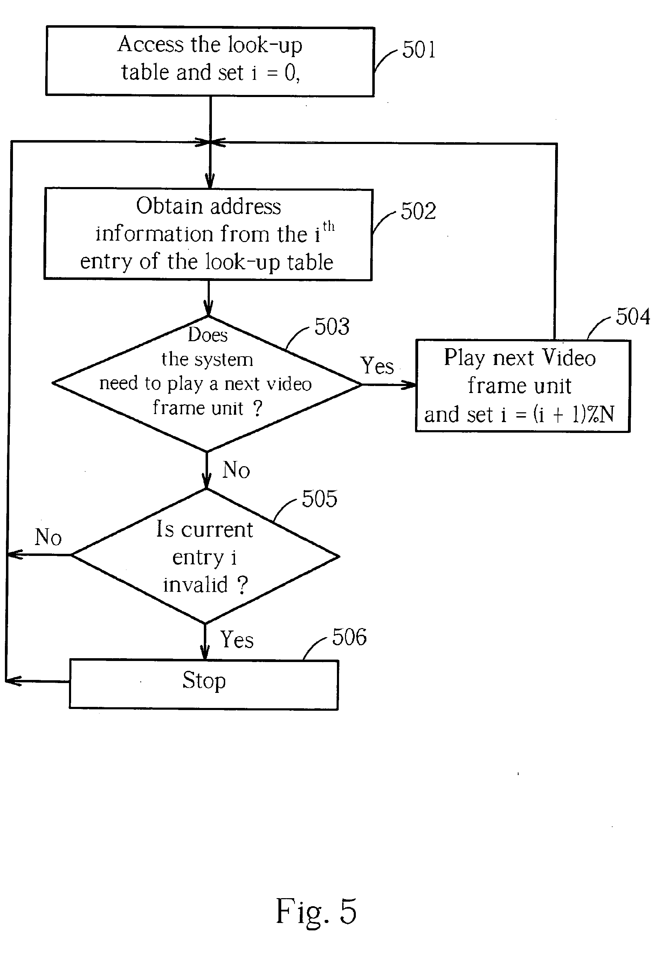

In another case where each VFU is not limited to have the same data size, the system 200 will then access the look-up table to determine a VFU or a target encoded frame (e.g. the first encoded frame) in a VFU that corresponds to the specific time. The system 200 can then utilize the determined address to locate the correct VFU in the buffer 250. Please refer to Fig.5. Fig.5 is a flowchart of a playback method according to an embodiment of the present invention. The steps are detailed as follows:
Step 501: Access the look-up table LUT and set i = 0.
Step 502: Obtain address information from the i^{th} entry of the look-up table LUT.
Step 503: Does the system 200 need to play a next VFU? If yes go to Step 504, if no go to Step 505.
Step 504: Play next VFU and set i = (i +1)%N.
Step 505: ls the current entry i invalid? If yes go to Step 506, if no go back to Step 502.
Step 506: Stop playback and jump to live video.

Initially, an entry number or a shift amount is utilized in the look-up table to search for the address corresponding to a desired frame or a VFU. In this case, i is initially set to zero (Step 501). The address information in the i^{th} entry of the look-up table is consulted, and the corresponding VFU or frame of a VFU is played back (Step 502). The system 200 then determines if a next VFU (or a group of frames corresponding to the address stored in the next entry in the look-up table) is required to be played back on the playback device 280 through the decoding module 260 and the display module 270 (Step 503). If so, the system 200 will set i to be equal to i + 1 (Step 504), and desired information will be obtained from the (i + 1)^{th} entry of the look-up table (LUT). Furthermore, if a current VFU (or current entry i in the look-up table) is determined to be invalid (Step 505), the system 200 may stop playback and jump to live video (Step 506). For example, the entry i is determined to be invalid when the corresponding entry in the look-up table is empty or an address pointing to a very old frame or VFU. When the current VFU or current entry i is determined to be invalid, the system 200 may find a valid entry k and set k to i. This usage of the look-up table (LUT) advantageously limits the possibility of a failure when invalid frames are encountered or avoiding displaying the earliest frame after a most recent frame.

The present disclosure allows data (i.e. encoded frames) to be grouped according to timing, therefore enabling a user to access desired data utilizing a time parameter. Creating a look-up table that contains timing information of the data allows data to be grouped into groups of data frames, wherein each group of data frames can have a different bit size. Therefore, since the address information is stored in the look-up table, it is clear that the VFUs can be randomly stored in the buffer, that is, stored in a discontinuous fashion. If each group of data frames has a fixed bit size, the look-up table may be omitted since a particular group of data frames may be located by calculating based on the time information. The ability of the system to allow searching for data utilizing time parameters enables trick mode operations to be performed.

## Claims

1. A method for searching data recorded in a storage (250), comprising:
receiving a digital data stream comprising a plurality of frames;
encoding the frames of the digital data stream; and
**characterized by**:
grouping the encoded frames into a plurality of video frame units (VFUs), wherein each VFU has the same playback duration;
storing each VFU in the storage (250);
determining a data address for a VFU stored in the storage (250) based on information acquired from encoding; and
retrieving the VFU from the storage (250) using the data address.

2. The method of claim 1, **characterized in that** the step of determining a data address for a VFU stored in the storage (250) based on information acquired from encoding further comprises:
storing data addresses indexing each VFU stored in the storage (250).

3. The method of claim 2, **characterized in that** the step of storing data addresses indexing each VFU stored in the storage (250) further comprises:
determining a data address for the first encoded frame of each VFU stored in the storage (250); and
storing the data address of each VFU.

4. The method of claim 1, **characterized in that** the step of encoding the frames of the digital data stream further comprises:
generating a bit stream size for each frame in the digital data stream; and
encoding the frames of the digital data stream according to a plurality of bit stream sizes to thereby make each VFU have the same data size.

5. The method of claim 4, **characterized in that** the data address of a VFU is calculated based on a time-shift parameter and the fixed data size of each VFU.

6. The method of claim 1, **characterized in that** each VFU is not limited to have the same data size.

7. The method of claim 6, **characterized in that** the step of encoding the frames of the digital data stream further comprises:
generating a bit stream size for each encoded frame; and
accumulating the bit stream size of each encoded frame in each VFU to determine the data address of each VFU.

8. The method of claim 7, **characterized in that** the data address corresponds to the first encoded frame of each VFU stored in the storage.

9. The method of claim 1, **characterized in that** the step of determining a data address for a VFU stored in the storage (250) based on information acquired from encoding further comprises:
creating a look-up table corresponding to a plurality of VFUs respectively, each entry containing at least the data address of a VFU.

10. The method of claim 8, **characterized by**:
storing a timing information and a data size of each VFU into a corresponding entry of the look-up table.

11. The method of claim 9, **characterized in that** an entry of the look-up table is updated as a VFU stored in the storage (250) is overwritten.

12. The method of claim 1, **characterized in that** the step of retrieving the VFU from the storage (250) using the data address further comprises:
searching at least a target encoded frame of a VFU using the data address according to a time-shift parameter; and
playing back data in the storage (250) from the target encoded frame.

13. The method of claim 12, **characterized in that** the step of searching at least a target encoded frame of a VFU using the data address according to a time-shift parameter further comprises:
locating the target encoded frame according to the number of encoded frames per VFU and the time-shift parameter.

14. The method of claim 12, **characterized in that** each VFU is not limited to have the same data size, the method further comprises creating a look-up table corresponding to a plurality of VFUs respectively, each entry containing at least the data address of a VFU, and the step of searching at least a target encoded frame further comprises:
locating the target encoded frame according to the look-up table and the time-shift parameter.

15. The method of claim 12, **characterized in that** the step of playing back data in the storage (250) from the target encoded frame further comprises:
decoding the VFU; and
playing the decoded VFU.

16. The method of claim 15, **characterized in that** the step of decoding the VFU further comprises:
copying the VFU to a memory (240).

17. A system (200) for recording data, comprising:
an encoding module (220), for receiving a digital data stream comprising a plurality of frames, and encoding the frames of the digital data stream; and
**characterized by**:
a microprocessor (230), coupled to the encoding module (220), for controlling the encoding module (220) to group the encoded frames into a plurality of video frame units (VFUs), wherein each VFU has the same playback duration; and
a first storage (250), coupled to the encoding module, for storing each VFU in a separate block of the first storage (250);
wherein the microprocessor (230) determines a data address for indexing a VFU stored in the first storage (250) based on information generated by the encoding module (220).

18. The system (200) of claim 17, **characterized by** a second storage (240), wherein the microprocessor (230) further determines a data address of each VFU stored in the first storage (250), and stores the data address of each VFU in the second storage (240).

19. The system (200) of claim 17, **characterized in that** the microprocessor (230) controls the encoding module (220) to generate a bit stream size for each frame, and encodes the frames according to a plurality of bit stream sizes so each VFU has the same data size.

20. The system (200) of claim 19, **characterized in that** the microprocessor (230) searches a VFU by calculating a data address of the first encoded frame of the VFU or a beginning of the VFU based on a timing parameter.

21. The system (200) of claim 17, **characterized in that** each VFU is not limited to have the same data size.

22. The system (200) of claim 21, **characterized by** a second storage (240), wherein the microprocessor (230) controls the encoding module (220) to generate a bit stream size for each encoded frame, accumulate the bit stream size of each encoded frame in each VFU to determine a data address of each VFU, and store the data address of each VFU into the second storage (240).

23. The system (200) of claim 22, **characterized in that** the data address corresponds to the first encoded frame of each VFU stored in the first storage (250).

24. The system (200) of claim 23, **characterized in that** the microprocessor (230) further creates a look-up table in the second storage (240), where the look-up table has a plurality of entries corresponding to a plurality of VFUs respectively, and each entry contains at least the data address of a VFU.

25. The system (200) of claim 24, **characterized in that** the look-up table further stores a timing information and a data size of each VFU into a corresponding entry.

26. The system (200) of claim 25, **characterized in that** an entry of the look-up table is updated as a VFU stored in the first storage (250) is overwritten.

27. A system (200) for playing back data, comprising:
a playback device (280); and
**characterized by**:
a first storage (250), coupled to the playback device (280), for storing a plurality of VFUs, wherein each VFU is stored in a separate block in the first storage (250), where each separate block can be searched by a data address, and each VFU has the same number of encoded frames; and
a microprocessor (230), coupled to the first storage (250) and the playback device (280), for utilizing a time-shift parameter to search the first storage (250) for at least a target encoded frame of a VFU;
wherein the playback device plays back data in the first storage (250) from the target encoded frame.

28. The system (200) of claim 27, **characterized in that** each VFU has the same data size, and the microprocessor (230) searches the first storage (250) for the target encoded frame or target VFU according to the time-shift parameter and the number of encoded frames per VFU.

29. The system (200) of claim 27, **characterized by** a second storage (240), wherein each VFU is not limited to have the same data size, the microprocessor (230) further creates a look-up table in the second storage (240), the look-up table has a plurality of entries corresponding to a plurality of VFUs respectively, each entry containing at least the data address of a VFU, and the microprocessor (230) searches the first storage (250) for the target encoded frame according to the look-up table and the time-shift parameter.
